(19) Europäisches Patentamt

European Patent Office

Office européen des brevets

(11) **EP 1 725 086 A1**

(12) **EUROPEAN PATENT APPLICATION**
published in accordance with Art. 158(3) EPC

(43) Date of publication:
**22.11.2006 Bulletin 2006/47**

(51) Int Cl.:
*H05H 1/24* (2006.01)    *C08J 7/00* (2006.01)
*B01J 19/08* (2006.01)

(21) Application number: **04772427.3**

(22) Date of filing: **30.08.2004**

(86) International application number:
**PCT/JP2004/012471**

(87) International publication number:
**WO 2005/107341 (10.11.2005 Gazette 2005/45)**

(84) Designated Contracting States:
**DE FR GB NL**

(30) Priority: **17.02.2004 JP 2004040272**

(71) Applicant: **Pearl Kogyo Co., Ltd**
**Osaka-shi,**
**Osaka 559-0015 (JP)**

(72) Inventor: **SAEKI, Noboru,**
**c/o PEARL KOGYO CO. Ltd.**
**Osaka-shi, Osaka 5590015 (JP)**

(74) Representative: **Fleuchaus, Michael A. et al**
**Fleuchaus & Gallo**
**Melchiorstrasse 42**
**81479 München (DE)**

(54) **PLASMA PROCESSING METHOD AND SYSTEM THEREFOR**

(57)    The amount and area of irradiation of excited species to the surface of a workpiece can be increased, the irradiation can be uniformly performed on the whole surface, and the loss of effective excited species is suppressed, so that the treating performance and efficiency can be remarkably improved. A pulse voltage is applied between discharge electrodes (4) which are opposingly positioned, to produce a corona discharge between pointed ends of the discharge electrodes, and the surface of a workpiece is irradiated with excited species including plasma produced by the corona discharge, thereby treating the surface. Plural discharging units are prepared in each of which a first electrode (11) and a second electrode (12) are opposingly placed. One of the secondary terminals of a transformer (15) is connected to each of the first electrodes (11) of plural discharging units (13). The other secondary terminal of the transformer (15) is connected to the second electrodes (12) of the plural discharging units (13) via rectifiers. The corona discharge is generated alternately in the plural discharging units (13).

Fig. 1

**Description**

Technical Field

The present invention is mainly applied to various surface treatments or gas decomposition processes such as those of, in the case where application of a coating composition or printing is performed on a resin such as polyethylene, polypropylene, polyester (PET), or PTFE (polytetrafluoroethylene), modifying the water repellent property of the surface to the water-attracting property, washing away organics adhering to the surface of glass, ceramics, a metal, a semiconductor, or the like, conducting disinfection or sterilization, and performing an etching process, and more particularly to a plasma treating method of the corona discharge type in which a surface treatment such as modification is conducted by irradiating the surface of a workpiece with excited species such as excited molecules, radicals, or ions which are generated as a result of molecular dissociation due to plasma produced by a corona discharge, and an apparatus therefor.

Background Art

A plasma surface treating method of the corona discharge type has an advantage that the use of an ignition gas such as helium, argon, or hydrogen which is required in the case of a plasma surface treating method of the glow discharge type at atmospheric pressure can be omitted, and improvement of the safety in use and reduction of the treatment cost due to a reduced gas consumption can be realized. Therefore, the method is often used in surface treatments such as surface modification.

Important factors in determining the treatment performance and treatment efficiency of this kind of the plasma surface treating method of the corona discharge type are the amount, area, and uniformity of irradiation of excited species including plasma produced by a corona discharge, to the surface of a workpiece. As means for attaining these important factors, conventionally, a pair of discharge electrodes are placed in an opposing state, a sinusoidal AC voltage is applied between the electrodes to generate a corona discharge between the electrodes, and a gas such as air is flown in an area of the discharge (for example, see Patent Reference 1).
Patent Reference 1: Japanese Patent Application Laying-Open No. 2001-293363 (Fig. 4)

Disclosure of the Invention

Problems that the Invention is to Solve

In the above-described conventional plasma surface treating method of the corona discharge type, however, one transformer is disposed for one discharging unit having a pair of discharge electrodes, and there is a problem in that, when a wide range is to be surface-treated, transformers the number of which is equal to that of placed discharging units must be equipped.
The invention has been conducted in view of the above-mentioned circumstances. It is an object of the invention to provide a plasma treating method in which an electric power to be supplied to plural discharging units is covered by one transformer, and an apparatus therefor.

Means for Solving the Problems

In order to attain the object, a plasma treating method of claim 1 of the invention is a plasma treating method in which a pulse voltage is applied between opposing discharge electrodes to produce a corona discharge between pointed ends of the discharge electrodes, and a surface of a workpiece is irradiated with excited species including plasma produced by the corona discharge, thereby treating the surface, wherein a secondary output of a transformer is branched to be supplied to discharge electrodes of different discharging units, whereby the corona discharge is generated between the discharge electrodes of the discharging units.
Furthermore, a plasma treating apparatus of claim 6 of the invention is a plasma treating apparatus in which a pulse voltage is applied to opposing discharge electrodes to produce a corona discharge between pointed ends of the discharge electrodes, and a surface of a workpiece is irradiated with excited species including plasma produced by the corona discharge, thereby treating the surface, wherein an output circuit which is led out from one of secondary terminals of a transformer is branched, rectifiers are disposed in branch circuits, respectively, the branch circuits are connected to one discharge electrodes of different discharging units, another secondary terminal of the transformer is branched to be connected to other discharge electrodes of the different discharging units, and the corona discharge is generated between the discharge electrodes based on a pulse voltage which is applied between the discharge electrodes in each of the discharging units.

Effects of the Invention

According to the invention having the above configuration, the pulse voltage is supplied from one transformer to plural discharging units to cause a discharge. Even when plural discharging units are disposed in order to increase the amount and area of irradiation of excited species to the surface of the workpiece, only one transformer is required. Therefore, the size of the apparatus can be reduced, and the installation cost can be suppressed to a low level. Moreover, a corona discharge can be generated alternately in the pair of discharging units. Therefore, the front and rear sides of the workpiece can be treated by the electricity supply from the same transformer.
In the above-described plasma treating method and apparatus of the corona discharge type, as the pulse voltage applied to the discharge electrodes, any one of a rectangular pulse voltage as set forth in claim 2, and a pulse voltage configured by plural pulsating waves which are obtained by full-wave rectifying an AC voltage as set forth in claim 3 may be used. In the case where the pulse voltage configured by pulsating waves is used, particularly, a special pulse voltage generation power source is not necessary, and a simple power source device configured by a combination of an AC power source of a commercial or ultrasonic region and rectifying elements such as diodes can be used. Therefore, it is possible to apply a pulse voltage of a desired period and duty, and realize a cost reduction of the apparatus.

In the case where, as set forth in claims 4 and 7, the pulse voltage is applied to the discharge electrodes in a state where a magnetic field is formed in vicinities of the pointed ends of the discharge electrodes, to generate a corona discharge between the electrodes, excited species including plasma produced by the corona discharge exist in the magnetic field. Therefore, the magnetic field applies a pushing force, i.e., the Lorentz force to a charged particle in plasma moving in the magnetic field, and the excited species can be irradiated toward the surface of the workpiece vigorously and substantially uniformly over a wide area.

As the means for forming the magnetic field in the plasma treating apparatus of the corona discharge type, any one of means configured by a permanent magnet, a pair of magnetic members, and a pair of pole pieces in which a gap is formed between end faces as set forth in claim 8, and that configured by an electromagnet connected to a DC power source, a pair of magnetic members, and a pair of pole pieces in which a gap is formed between end faces as set forth in claim 9 may be used. In the case where a permanent magnet is used, lowering of the production cost and saving of the power consumption are enabled. By contrast, in the case where an electromagnet is used, the production cost and the power consumption are increased as compared with the case where a permanent magnet is used. However, the Lorentz force, and the irradiation force and irradiation diffusion range of the excited species including plasma can be controlled easily and arbitrarily in accordance with the surface configuration of the workpiece, or the like, by adjusting the magnetic flux density in the gap between the end faces of the pole pieces. Therefore, the shape applicability with respect to the workpiece can be enhanced, and the treatment performance and treatment efficiency can be further improved.

In the invention, as set forth in claims 5 and 10, a reactive gas such as argon, nitrogen, or carbon dioxide gas, or air may be introduced between the discharge electrodes at atmospheric pressure or a vicinity of atmospheric pressure. According to the configuration, a flow of the gas causes excited species including plasma to be irradiated toward the surface of the workpiece, and the amount, area, and uniformity of irradiation to the surface of the workpiece can be attained. Moreover, the excitation gas flow is caused to be irradiated, by the pushing action force (Lorentz force) which is received from the magnetic field, whereby the invention can be used in various surface treatments.

Brief Description of the Drawings

[Fig. 1] Fig. 1 is a partially omitted longitudinal section front view showing an embodiment of the plasma treating apparatus of the invention.

[Fig. 2] Fig. 2 is a partially cutaway perspective view of the apparatus of Fig. 1.

Description of Reference Numerals

4 ... discharge electrode, 6, 7 ... pole piece, 8 ... permanent magnet, 11 ... first electrode, 12 ... second electrode, 13 ... discharging unit, 15 ... transformer, 19, 20 ... rectifier, 18 ... branch circuit, M ... magnetic field forming means.

Best Mode for Carrying Out the Invention

Hereinafter, an embodiment of the invention will be described on the basis of the drawings.

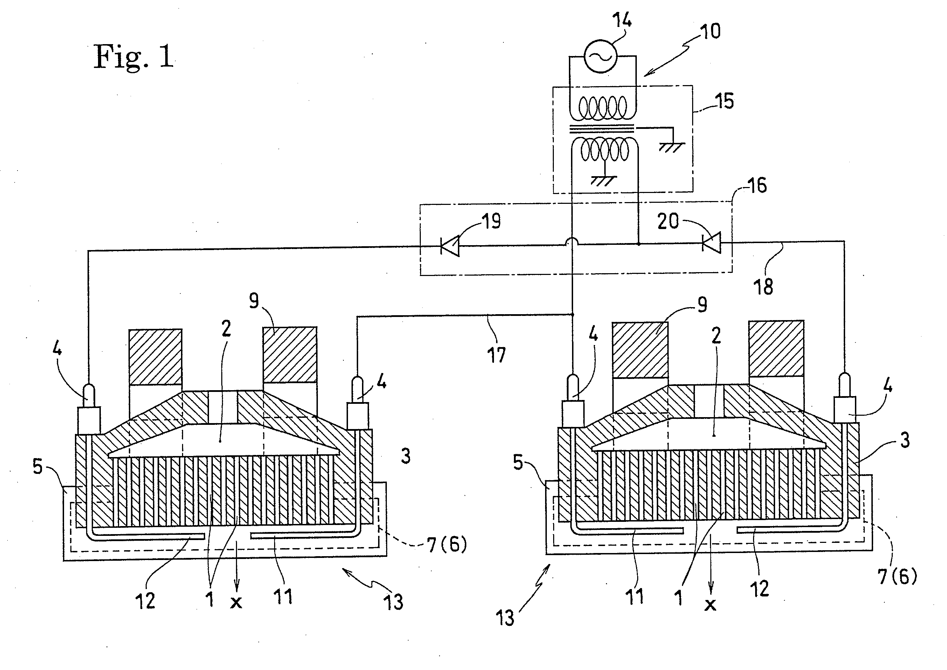

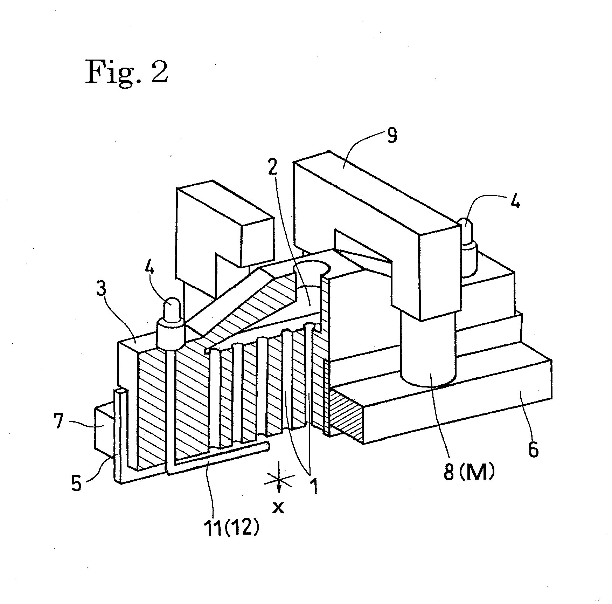

Fig. 1 is a schematic longitudinal section front view showing an embodiment of a plasma surface treating apparatus to which the invention is applied, and Fig. 2 is a partially cutaway perspective view.
The plasma surface treating apparatus is configured by: a plate-like insulating member (3) in which many gas ejection holes (1) are disposed in a row, and a gas reservoir (2) where upper ends portions of the gas ejection holes communicate with each other is formed inside; discharge electrodes (4) which are supported on the plate-like insulating member (3); a pair of ceramics-made insulating spacers (5) which are formed in a state where the discharge electrodes (4) are interposed back and forth; pole pieces (6) (7) which are placed outside the ceramics-made insulating spacers (5), respectively; magnets (8) which are magnetically coupled and connected to the pole pieces (6) (7), respectively; coupling rods (9) which are made of a magnetic material, and which connect together upper end portions of the magnets (8); and a power source device (10) which applies a discharging voltage to the discharge electrodes (4).

The discharge electrodes (4) are configured by: a first electrode (11) which is formed into a substantially L-like shape; and a substantially L-like second electrode (12) which is placed in a state where it opposes the first electrode (11). Each of the electrode (11) (12) is formed by a refractory metal such as tungsten or molybdenum.

The power source device (10) is configured by: an AC power source (14); a transformer (15) which boosts an AC current; and pulse voltage applying means (16) consisting of a full-wave rectifier circuit which is placed on the secondary side of the transformer (15), and which is formed by removing away capacitors from a voltage doubler rectifier circuit. An output circuit (17) which electrically connects one of the secondary terminals of the transformer (15) to the first electrode (11) of a discharging unit (13) is branched and formed, and branch output circuit (17) are connected to the first electrodes (11) of different discharging units, respectively. In second output circuits (18) which electrically connect the other secondary terminal of the transformer (15) to the second electrodes (12), high-voltage rectifying diodes (19) (20) are respectively interposed. In this case, the high-voltage rectifying diode (19) and the high-voltage rectifying diode (20) are placed while their flow directions are opposite to each other, so that, in one of the discharging units, a discharge is started when the second electrode (12) outputs a high voltage with respect to the first electrode (11), and, in the other discharging unit, a discharge is started when the second electrode (12) outputs a low voltage with respect to the first electrode (11). Namely, as a pulse voltage, the pulse voltage applying means (16) applies alternately positive- and negative-voltage side pulsating waves which are respectively half-wave rectified. A corona discharge is produced between the pointed ends of the first electrode (11) and the second electrode (12), and excited species including plasma is produced by the corona discharge.

In the power source device (10), the AC power source of 50 Hz to 100 KHz is boosted by the transformer (15) to a sinusoidal wave having a peak value Vp of 5 to 15 KV. The boosted sinusoidal wave is converted to a DC pulsating wave having a peak value Vp of 5 to 15 KV. The positive voltage portions (DC) are applied between the first electrode (11) and the second electrode (12) of one discharging unit k, and the negative voltage portions are applied between the first electrode (11) and the second electrode (12) of the other discharging unit, whereby, while setting a sum of the ON period and the OFF period as one period T, pulse voltages having a pulse frequency (1/T) of 10 to 200 Hz and a pulse duty of 10 to 100% are alternately generated.

Magnetic field forming means for forming a magnetic field extending along a horizontal plane perpendicular to a gas flow in which charged particles in plasma produced by the corona discharge exist is disposed in positions proximal to the pointed ends of the discharge electrodes (4). The magnetic field forming means is configured by: the permanent magnets (8) which are placed above basal end portions of the discharge electrodes (4); a pair of soft magnetic members which are made of pure iron or the like, which are connected to the both N and S poles of the permanent magnets (8), and which elongate to the vicinities of the pointed ends of the pair of discharge electrodes (4); and a pair of pole pieces (6) (7) which are made of pure iron or the like, which are integrally continuous to the tip ends of the soft magnetic members, and which oppose each other with the pointed ends of the discharge electrodes (4) therebetween to form a magnetic field forming gap between the opposing end faces. In accordance that a charged particle in plasma moves in the magnetic field formed in the gap between the end faces of the pole pieces (6) (7) in the magnetic field forming means, the charged particle undergoes a pushing force, i.e., the Lorentz force, and excited species including plasma are irradiated toward the surface of the workpiece as indicated by the arrow X in Figs. 1 and 2.

When the charge of a particle is Q, the velocity is v, and the magnetic flux density between the end faces of the pole pieces is B, the Lorentz force F is:

$$\mathbf{F} = \mathbf{Qv} \times \mathbf{B}$$

The force acts perpendicularly to the velocity vector of the charged particle, whereby excited species including plasma are pushed and irradiated in the direction of the arrow X.

A reactive gas such as argon, nitrogen, oxygen, or carbon dioxide gas, or air is introduced between the pair of discharge electrodes at the atmospheric pressure or a vicinity of the atmospheric pressure, from the gas ejection holes (1) formed in the plate-like insulating member (3), and an excitation gas flow including plasma is irradiated toward the surface of the workpiece by the Lorentz force received from the magnetic field. Therefore, the applicability of the surface treatment can be expanded.

In the thus configured plasma surface treating apparatus of the corona discharge type, a magnetic field configured by an effective magnetic flux and a leakage magnetic flux is formed in the gap between the end faces of the pole pieces (6) (7) which are connected to the N and S poles of the permanent magnet (8) via the soft magnetic members. In this state, the output rectified by the above-mentioned power source device (10) applies a positive or negative pulse voltage of a pulse frequency of 10 to 200 Hz between the first electrode (11) and the second electrode (12) to alternately produce a corona discharge between the pointed ends of the electrodes (11) (12). As a result, excited species including plasma produced by the corona discharge exist in the magnetic field. A force in the direction of the arrow X which is perpendicular to the magnetic field is applied to the excited species including plasma by the above-mentioned Lorentz force F that is received from the magnetic field by charged particles in the plasma moving in the magnetic field.

In the invention, a positive or negative pulse voltage configured by plural pulsating waves obtained by rectifying an AC voltage is used in the first electrode (11) and second electrodes (12) which constitute the pair of discharge electrodes (4). Therefore, a special pulse voltage generating power source such as a multivibrator, a Schmidt trigger circuit, or a blocking oscillator is not required, and a pulse voltage of a desired period and duty can be applied by using a simple power source device configured by a combination of a commercial AC power source or an ultrasonic power source and rectifying elements such as diodes. Moreover, the permanent magnet (8) which can be produced at a low cost, and which does not consume an electric power is used as the magnetic field forming means. As a result, the introduction cost and running cost of the whole apparatus can be reduced.

In the embodiment, the permanent magnet (8) is used as the magnetic field forming means (M). Alternatively, an electromagnet may be used as the magnetic field forming means. When an electromagnet is used as the magnetic field forming means (M) as described above, the Lorentz force F can be controlled, and the force which is loaded on excited species including plasma, and which is perpendicular to the magnetic field can be adjusted.

In the embodiment, the magnetic field is formed between the end faces opposing each other across the pointed ends of the discharge electrodes (4), and a reactive gas or air is ejected between the end faces. Alternatively, only one of the magnetic field formation and the gas introduction may be employed.

In the embodiment, the pulse voltage applying means configured by the AC power source and the rectifier circuit for generating a pulse voltage formed by plural pulsating waves which are obtained by full-wave rectifying the AC voltage has been described. Alternatively, the pulse voltage applying means may be a pulse voltage generating power source which generates a rectangular pulse voltage.

Industrial Applicability

The invention can be mainly applied to various surface treatments such as those of, in the case where application of a coating composition or printing is performed on a resin such as polyethylene, polypropylene, polyester (PET), or PTFE (polytetrafluoroethylene), modifying the water repellent property of the surface to the water-attracting property, washing away organics adhering to the surface of glass, ceramics, a metal, a semiconductor, or the like, conducting disinfection or sterilization, and performing an etching process, or a gas decomposition process using molecular dissociation due to plasma produced by a corona discharge.

**Claims**

1. A plasma treating method in which a pulse voltage is applied between opposing discharge electrodes (4) to produce a corona discharge between pointed ends of said discharge electrodes (4), and a surface of a workpiece is irradiated with excited species including plasma produced by the corona discharge, thereby treating the surface, wherein

one of a secondary output of a transformer (15) is branched to be supplied to one discharge electrodes (4) of different discharging units (13), and another secondary output of said transformer (15) is supplied to other discharge electrodes (4) of said different discharging units (13) via rectifiers (19) (20), respectively, whereby a corona discharge is alternately generated between said discharge electrodes (4) of said discharging units (13).

2. A plasma treating method according to claim 1, wherein a rectangular pulse voltage is used as the pulse voltage.

3. A plasma treating method according to claim 1, wherein a pulse voltage configured by plural pulsating waves which are obtained by full-wave rectifying an AC voltage is used as the pulse voltage.

4. A plasma treating method according to any one of claims 1 to 3, wherein a magnetic field is formed in vicinities of said pointed ends of said discharge electrodes (4) and in places where charged particles in the plasma exist, and the excited species including plasma are irradiated toward said surface of said workpiece by a pushing force acting on charged particles moving in the magnetic field.

5. A plasma treating method according to any one of claims 1 to 4, wherein air or a reactive gas is introduced between said discharge electrodes (4) at atmospheric pressure or a vicinity of atmospheric pressure, whereby an excitation gas flow including plasma is caused to be irradiated toward said surface of said workpiece.

6. A plasma treating apparatus in which a pulse voltage is applied between opposing discharge electrodes (4) to produce a corona discharge between pointed ends of said discharge electrodes (4), and a surface of a workpiece is irradiated with excited species including plasma produced by the corona discharge, thereby treating the surface, wherein

one of a secondary output of a transformer (15) is branched, rectifiers (19) (20) are disposed in branch circuits (18), respectively, said branch circuits (18) are connected to one discharge electrodes (4) of different discharging units (13), another secondary terminal of said transformer (15) is branched to be connected to other discharge electrodes (4) of said different discharging units (13), and the corona discharge is alternately generated between said discharge electrodes (4) based on a pulse voltage which is applied between said discharge electrodes (4) in each of said discharging units (13).

7. A plasma treating apparatus according to claim 6, wherein magnetic field forming means (M) is disposed, said magnetic field forming means forming a magnetic field in vicinities of said pointed ends of said discharge electrodes (4) which are opposingly placed, and in places where charged particles in the plasma exist, to be able to apply a pushing force to a charged particle moving in the magnetic field, the pushing force causing excited species including plasma to be irradiated toward said surface of said workpiece.

8. A plasma treating apparatus according to claim 7, wherein said magnetic field forming means (M) is configured by: a permanent magnet (8); a pair of magnetic members which are connected to N and S poles of said permanent magnet (8), and which elongate to vicinities of said pointed ends of said pair of discharge electrodes (4); and a pair of pole pieces (6) (7) which are continuous to tip ends of said magnetic members, and which form a gap between end faces.

9. A plasma treating apparatus according to claim 7, wherein said magnetic field forming means (M) is configured by: an electromagnet connected to a DC power source; a pair of magnetic members which are connected to N and S poles of said electromagnet, and which elongate to vicinities of said pointed ends of said pair of discharge electrodes (4); and a pair of pole pieces (6) (7) which are continuous to tip ends of said magnetic members, and which form a gap between end faces.

10. A plasma treating apparatus according to any one of claims 6 to 9, wherein means for introducing air or a reactive gas between said discharge electrodes at atmospheric pressure or a vicinity of atmospheric pressure is disposed, and the air or the reactive gas is introduced via said means, whereby an excitation gas flow including plasma is caused to be irradiated toward said surface of said workpiece.

# Fig. 1

EP 1 725 086 A1

Fig. 2

## INTERNATIONAL SEARCH REPORT

| International application No. |
|---|
| PCT/JP2004/012471 |

**A. CLASSIFICATION OF SUBJECT MATTER**
Int.Cl⁷ H05H1/24, C08J7/00, B01J19/08

According to International Patent Classification (IPC) or to both national classification and IPC

**B. FIELDS SEARCHED**

Minimum documentation searched (classification system followed by classification symbols)
Int.Cl⁷ H05H1/24, C08J7/00, B01J19/08

Documentation searched other than minimum documentation to the extent that such documents are included in the fields searched

| Jitsuyo Shinan Koho | 1940–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-158219 A (Sekisui Chemical Co., Ltd.), 31 May, 2002 (31.05.02), Par. Nos. [0024] to [0028], [0044]; Figs. 1 to 4 (Family: none) | 1-10 |
| Y | JP 7-226395 A (Matsushita Electric Industrial Co., Ltd.), 22 August, 1995 (22.08.95), Par. Nos. [0014] to [0019]; Figs. 1, 2, 10 to 14 & US 5609690 A1 | 1-10 |
| Y | JP 5-59198 A (Softal Electronic GmbH), 09 March, 1993 (09.03.93), Par. Nos. [0019] to [0046]; Figs. 3, 4, 10, 13 (Family: none) | 1-10 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 November, 2004 (16.11.04) | 30 November, 2004 (30.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/012471 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-332572 A  (Semiconductor Energy Laboratory Co., Ltd.), 22 November, 2002 (22.11.02), Par. Nos. [0023], [0028]; Fig. 1 (Family: none) | 1-10 |
| Y | JP 11-512651 A  (Seondo Electric Co., Ltd.), 02 November, 1999 (02.11.99), Page 14, line 22 to page 15, line 1; page 15, lines 18 to 28; page 20, line 10 to page 21, line 1; Figs. 5, 9 & WO 97/24515 A1        & US 6168689 B1 | 1-10 |
| Y | JP 2002-305070 A  (Toto Ltd.), 18 October, 2002 (18.10.02), Par. Nos. [0012] to [0020]; Figs. 1, 2 (Family: none) | 1-10 |
| Y | JP 2003-86393 A  (Keyence Corp.), 20 March, 2003 (20.03.03), Full text; all drawings (Family: none) | 1-10 |
| Y | JP 11-60759 A  (Sekisui Chemical Co., Ltd.), 05 March, 1999 (05.03.99), Par. Nos. [0015] to [0037]; Figs. 1 to 7 (Family: none) | 1-10 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001293363 A